# EUROPÄISCHE PATENTSCHRIFT

(11) **EP 1 642 101 B1**
(45) Veröffentlichungstag und Bekanntmachung des Hinweises auf die Patenterteilung: **14.05.2008**
(21) Anmeldenummer: 04763023.1
(22) Anmeldetag: 24.06.2004
(51) Int. Cl.: G01K 13/12, G01J 5/04

(54) **VERFAHREN UND VORRICHTUNG ZUM MESSEN ABKÜHLKURVE VON SCHMELZ EN**
METHOD AND DEVICE FOR MEASURING A MELT COOLING CURVE
PROCEDE ET DISPOSITIF POUR MESURER LA COURBE DE REFROIDISSEMENT DE MASSES EN FUSION

(30) Priorität: 09.07.2003 DE 10331124
(43) Veröffentlichungstag der Anmeldung: 05.04.2006
(73) Patentinhaber: Heraeus Electro-Nite International N.V., 3530 Houthalen (BE)
(72) Erfinder: DAMS, Francis, B-3010 Kessel-Lo (BE); PLESSERS, Jacques, B-3530 Houthalen-Helchteren (BE); VERSTREKEN, Paul, Clement, B-3200 Aarschot (BE)
(74) Vertreter: Kühn, Hans-Christian
(86) Internationale Anmeldenummer: PCT/EP2004/006830
(87) Internationale Veröffentlichungsnummer: WO 2005/005945

(56) Entgegenhaltungen:
- EP-A- 0 655 613
- EP-A- 0 802 401
- US-A- 4 355 907

## Beschreibung

Die Erfindung betrifft ein Verfahren zum Messen der Abkühlkurve von Schmelzen und/oder der Aufheizkurve von Schmelzenproben mit einer optischen Faser, wobei ein mindestens teilweise eine freie Oberfläche aufweisendes Eintauchende der optischen Faser von einem temperaturbeständigen Probenaufnahmeraum beabstandet umgeben wird, dass die optische Faser mit ihrem Eintauchende in die Schmelze eingetaucht und dabei in dem Probenaufnahmeraum eine Probe gebildet wird, wobei danach der Probenaufnahmeraum mit der Probe und der optischen Faser aus der Metallschmelze herausgezogen und die Abkühlkurve der Probe und/oder, nach vorhergehender Erstarrung der Probe, der Temperaturverlauf beim Aufheizen anhand eines von der optischen Faser aufgenommenen und an ein Messgerät weitergeleiteten Signals gemessen wird. Des weiteren betrifft die Erfindung eine entsprechende Vorrichtung sowie deren Verwendung. Dabei werden unter Schmelzen sowohl Schmelzen reiner Metalle wie Eisen, Kupfer oder Stahl oder Legierungen als auch Kryolithschmelzen, Salzschmelzen oder Glasschmelzen verstanden.

Temperaturmessverfahren und Vorrichtungen, bei denen mit Hilfe von optischen Fasern in Hochtemperatur Flüssigkeitentemperaturen gemessen werden, sind unter anderem aus EP 646 778 B1 bekannt. Weitere Vorrichtungen sind aus US 4,355,907 bekannt. Hier wird ein Eintauchsensor beschrieben, mit dem eine Probe einer Metallschmelze entnommen wird. Die Probe haftet dabei in einem Hohlraum. Zwischen dem Hohlraum und der die Messwerte aufnehmenden optischen Faser ist eine Graphitscheibe angeordnet.

Ein Probengefäß, in dem Metallschmelze eingegossen wird und in dem dann mittels einer optischen Faser die Temperatur der Metallschmelze gemessen wird, ist aus DE 36 31 645 A1 bekannt. Andere Vorrichtungen zum Messen der Temperatur in Metallschmelzen sind aus JP 62-185129 und JP 62-185130 bekannt. Verfahren zum Messen der Schmelztemperatur in einem Schmelztiegel mit Hilfe von optischer Strahlung sind des weiteren aus US 6,106,150, US 6,004,031 oder aus EP 802 401 A1 bekannt.

Aufgabe der vorliegenden Erfindung ist es, die bekannten Verfahren bzw. Vorrichtungen zu verbessern.

Die Aufgabe wird erfindungsgemäß durch die Merkmale der unabhängigen Ansprüche gelöst. Dadurch, dass sowohl die Stirnseite als auch ein Teil der Seitenwand des Eintauchendes der optischen Faser eine freie Oberfläche aufweisen bzw. in direkten Kontakt mit der Schmelze gebracht werden, kann die Messgenauigkeit und die Ansprechzeit verbessert werden. Vorteilhafte Ausführungsformen ergeben sich aus den abhängigen Ansprüchen. Insbesondere ist es von Vorteil, dass die Länge des mit der Schmelze in direktem Kontakt befindlichen Teils der Seitenwand der optischen Faser mindestens 10mal, vorzugsweise mindestens 30mal so groß ist wie der Durchmesser der freien Oberfläche der Stirnseite der optischen Faser, die bei der Messung in direkten Kontakt mit der Schmelze gebracht wird.

Vorzugsweise wird nach dem Eintauchen des Eintauchendes der optischen Faser in die Schmelze in dem Probenaufnahmeraum ein Unterdruck erzeugt und Schmelze in den Probenaufnahmeraum eingesaugt, da dadurch die Probennahme als solche wesentlich verbessert wird. Auch ist es möglich, die Probe mittels ferrostatischen Drucks in den Probenaufnahmeraum zu bringen. Des weiteren ist es zweckmäßig, dass nach der Messung der Abkühlkurve die optische Faser erneut in die Schmelze eingetaucht und in dem Probenaufnahmeraum ein Überdurck erzeugt und flüssige Schmelze aus dem Probenaufnahmeraum herausgedrückt wird. Das Herausdrücken kann natürlich auch nach der Messung der Aufheizkurve erfolgen. Es kann auch zweckmäßig sein, dass nach der Messung der Abkühlkurve und/oder Aufheizkurve das Eintauchende der Faser und das mit Schmelze gefüllte Ende des Probenaufnahmeraumes abgeschnitten werden, um eventuell beschädigtes oder verbrauchtes Material zu beseitigen.

Neben der Messung der Abkühlkurve der Schmelze oder der Aufheizkurve zuvor erstarrter Schmelzenproben, die Aufschlüsse über Materialeigen-schaften zulassen, kann auch die Badtemperatur der Schmelze gemessen werden. Vorteilhafterweise kann das Eintauchende der optischen Faser zumindest zeitweise in Vibration versetzt werden, um eine Unterkühlung der Probe zu verhindern. Das Verfahren kann vorzugsweise zur Messung der Liquidustemperatur und/oder einer Phasenumwandlungstemperatur der Schmelze verwendet werden. Von Vorteil ist es, dass die Stirnseite der optischen Faser eine freie Oberfläche aufweist, um die Signalaufnahme zu verbessern. Die optische Faser kann insbesondere aus Saphir oder aus Quarzglas gebildet sein, um insbesondere in höheren Temperaturbereichen beständig zu sein.

Zweckmäßigerweise ist der Probenaufnahmeraum als Rohr ausgebildet, insbesondere aus Quarzglas oder aus Metall oder Keramik. An dem Eintauchende des Probenaufnahmeraumes kann eine Schlackekappe angeordnet sein, um zu verhindern, dass auf der zu analysierenden Schmelze aufliegendes Material in den Probenaufnahmeraum gelangt. Die Schlackekappe ist üblicherweise aus einem Material, das während des Durchgangs durch die auf der Schmelze aufliegenden Schicht oder in der Schmelze schmilzt oder sich auflöst.

Der Probenaufnahmeraum ist vorzugsweise mit einer Vorrichtung zur Erzeugung von Über- oder Unterdruck pneumatisch verbunden, um den notwendigen Druck einstellen und ggf. präzise regeln zu können. Des weiteren ist es zweckmäßig, dass die optische Faser mit einem Vibrator verbunden ist. Der Vibrator kann beispielsweise an dem Träger für die Faser angeordnet sein und bewirkt durch Übertragung einer Vibration auf die Faser und auf den Probenaufnahmeraum, dass eine Unterkühlung der zu analysierenden Schmelze verhindert wird. Die Ankopplung des Vibrators an den Probenaufnahmeraum ist aus diesem Grund zweckmäßigerweise ebenfalls zu gewährleisten.

Die erfindungsgemäße Vorrichtung kann sowohl zur Messung der Badtemperatur der Schmelze als auch zur Messung der Liquidustemperatur und/oder einer Phasenumwandlungstemperatur der Schmelze verwendet werden.

Nachfolgend wird ein Ausführungsbeispiel der Erfindung anhand einer Zeichnung näher beschrieben.

In der Zeichnung zeigt
Figur 1 eine Messvorrichtung mit Trägerrohr und
Figur 2 eine weitere Ausführungsform der Messeinrichtung.

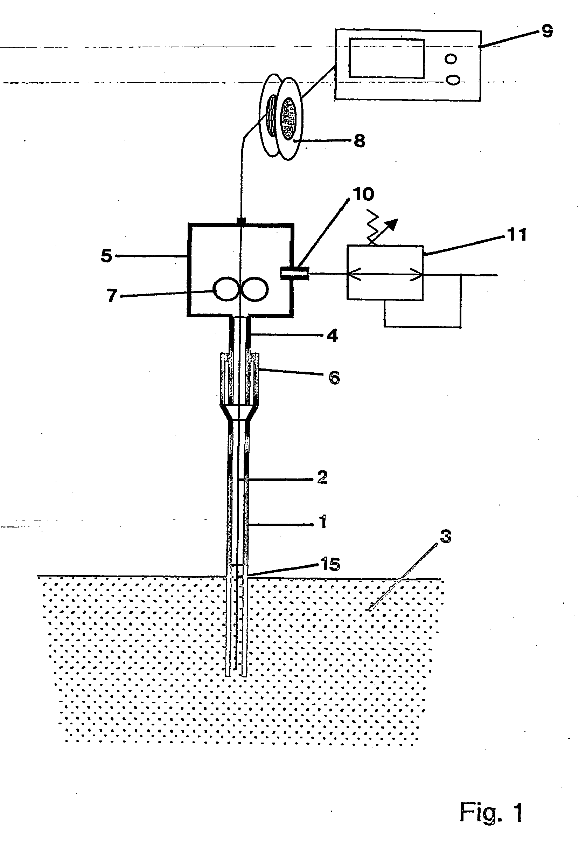

Die in Figur 1 dargestellte Ausführungsform weist ein ersetzbares Trägerrohr 1 auf, durch das die optische Faser 2 geführt ist. Das Trägerrohr 1 kann nach Verbrauch in der Metallschmelze 3 ersetzt werden. Es wird dazu von dem Anschlussrohr 4 des Gehäuses 5 entfernt und ein neues Trägerrohr 1 wird mit dichter Verbindung 6 auf das Anschlussrohr 4 aufgesteckt. In dem Gehäuse 5 ist ein System von Transportrollen 7 angeordnet, mit deren Hilfe die optische Faser 2 von einer Spule 8 abgewickelt und der Metallschmelze 3 zugeführt wird. Das Eintauchende der Faser 3 weist sowohl an der Stirnseite als auch an dem daran anschließenden Teil der Seitenwand eine freie Oberfläche auf. Der übrige Teil der Faser kann eine Beschichtung, beispielsweise aus Kunststoff, aufweisen, die beispielsweise durch verbrennen entfernt werden kann. Das andere Ende der optischen Faser ist mit einem Messgerät 9 verbunden, das der Signalaufnahme und -auswertung dient.

Das Gehäuse 5 enthält weiterhin einen Gasanschlussstutzen 10, an dem das Überdruck-/Unterdruck-Einheit 11 angeschlossen ist.

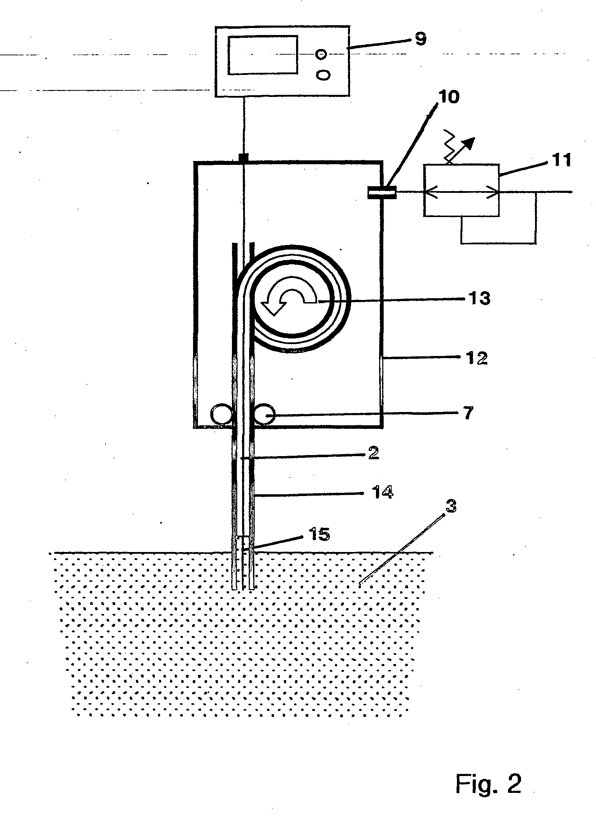

Die in Figur 2 dargestellte Ausführungsform weist als Kernstück eine Kabelbox 12 auf. In dieser Kabelbox 12 ist die optische Faser 2 auf einer Rolle 13 aufgewickelt. Die optische Faser 2 ist von einem Hüllrohr 14 umgeben, welches mit der Faser 2 zusammen abgewickelt und der Metallschmelze 3 mittels Transportrollen 7 zugeführt wird. Das der Metallschmelze 3 abgewandte Ende der optischen Faser 2 ist mit dem Messgerät 9 verbunden. Ebenso wie das Gehäuse 5 in der Ausführungsform nach Figur 1 ist die Kabelbox 12 hermetisch verschlossen und weist einen Gasanschlussstutzen 10 auf. An diesen Gasanschlussstutzen 10 ist die Überdruck-/Unterdruckeinheit 11 verbunden.

Die optische Faser 2 weist an ihrem der Metallschmelze 3 zugewandten Ende eine freie Oberfläche, sowohl an der Stirnseite als auch an der Seitenwand auf, wobei die Länge der freien Oberfläche der optischen Faser 2, von der Stirnseite in Längsrichtung gemessen, mehr als 30mal so groß ist wie der Durchmesser der zum Eintauchen in die Metallschmelze 3 bestimmten Stirnseite der optischen Faser 2. Zur Messung wird die optische Faser 2 mit ihrem Eintauchende in die Schmelze 3 eingetaucht. Dabei wird in dem Trägerrohr 1 bzw. dem Hüllrohr 14 ein Unterdruck erzeugt und ein Anteil 15 der Schmelze in das Rohr hineingesaugt. Dieser untere Teil des Trägerrohrs 1 bzw. des Hüllrohrs 14 bildet den Probenaufnahmeraum. Die Vorrichtung mit dem Probenaufnahmeraum und der darin befindlichen Probe (in den Probenaufnahmeraum hineingesaugter Teil 15 der Metallschmelze 3) wird aus der Metallschmelze 3 herausgezogen. Außerhalb der Metallschmelze 3 ist die Temperatur deutlich niedriger als in der Metallschmelze 3, so dass die Probe abgekühlt wird und die Abkühlkurve anhand des von der optischen Faser 2 aufgenommenen und an das Messgerät 9 weitergeleiteten Strahlungssignals aufgezeichnet wird. Dabei macht man sich die bekannte Wirkung eines schwarzen Strahlers zunutze.

Statt der Abkühlkurve oder zusätzlich dazu kann die Probe nach Erstarrung/Abkühlung aufgeheizt/aufgeschmolzen werden, beispielsweise durch Eintauchen des Probenaufnahmeraumes des Probennehmers in die Schmelze. Dabei wird die Aufheizkurve ebenfalls als Temperatur-Zeit-Diagramm aufgezeichnet und ausgewertet.

Die Abkühlkurve/Aufheizkurve gibt Aufschluss über die Liquidustemperatur und/oder die Solidustemperatur, da bei dieser Temperatur in einem Temperatur-Zeit-Diagramm ein Temperaturplateau über eine kurze Zeit registriert wird. Ebenso werden Phasenumwandlungen innerhalb der abkühlenden Metallschmelze durch Temperaturplateaus in dem Temperatur-Zeit-Diagramm erkennbar. Solange das Eintauchende der optischen Faser 2 sich in der Metallschmelze 3 selbst befindet, kann deren aktuelle Badtemperatur gemessen werden.

Nach der Messung der Abkühlkurve kann die optische Faser 2 erneut in die Metallschmelze 3 getaucht werden. Dabei schmilzt die Probe auf. Nach dem Aufschmelzen kann die Aufheizkurve bestimmt werden. Über den Gasanschlussstutzen 10 wird danach ein Überdruck in der Messvorrichtung, insbesondere innerhalb des Trägerrohres 1 bzw. des Hüllrohres 14 erzeugt, so dass die flüssige Schmelzenprobe aus dem Probenaufnahmeraum herausgedrückt wird. Die Vorrichtung kann danach für eine erneute Probennahme eingesetzt werden. Gegebenenfalls muss in der Ausführungsform gemäß Figur 1 das Trägerrohr 1 ersetzt und die optische Faser 2 in das neue Trägerrohr 1 nachgeführt werden. In der Ausführungsform gemäß Figur 2 wird das Eintauchende des Hüllrohres 14 mit der optischen Faser 2 sowie eventuell im Hüllrohr 14 enthaltene Schmelzereste abgeschnitten, sobald dieses Eintauchende unbrauchbar geworden ist. Die optische Faser 2 wird dann gemeinsam mit dem Hüllrohr 14 von der Spule 13 abgewickelt.

Des weiteren ist die optische Faser mit einem in der Zeichnung nicht dargestellten Vibrator verbunden. Der Vibrator kann beispielsweise an dem Träger 1 für die Faser 2 angeordnet sein und bewirkt durch Übertragung einer Vibration auf die Faser 2 und auf den-Probenaufnahmeraum, dass eine Unterkühlung der zu analysierenden Schmelze verhindert wird. Die starre Ankopplung des Vibrators an den Probenaufnahmeraum ist aus diesem Grund zweckmäßigerweise ebenfalls sinnvoll.

## Patentansprüche

1. Verfahren zum Messen der Abkühlkurve von Schmelzen und/oder der Aufheizkurve von Schmelzenproben mit einer optischen Faser, wobei die optische Faser (2) mit ihrem Eintauchende in die Schmelze (3) eingetaucht und dabei in einem Probenaufnahmeraum eine Probe gebildet wird, wobei danach der Probenaufnahmeraum mit der Probe und der optischen Faser (2) aus der Metallschmelze (3) herausgezogen und die Abkühlkurve der Probe und/oder, nach vorhergehender Erstarrung der Probe, der Temperaturverlauf beim Aufheizen anhand eines von der optischen Faser (2) aufgenommenen und an ein Messgerät (9) weitergeleiteten Signals gemessen wird, **dadurch gekennzeichnet, dass** ein mindestens teilweise eine freie Oberfläche aufweisendes Eintauchende der optischen Faser (2) von dem temperaturbeständigen Probenaufnahmeraum beabstandet umgeben wird und sowohl die Stirnseite als auch ein Teil der Seitenwand des Eintauchendes der optischen Faser (2) in direkten Kontakt mit der Schmelze (3) gebracht werden.

2. Verfahren nach Anspruch 1, **dadurch gekennzeichnet, dass** die Länge des mit der Schmelze (3) in direktem Kontakt befindlichen Teils der Seitenwand der optischen Faser (2) mindestens 10 mal, vorzugsweise mindestens 30 mal so groß ist wie der Durchmesser der mit der Schmelze (3) in direktem Kontakt befindlichen Stirnseite der optischen Faser (2).

3. Verfahren nach Anspruch 1 oder 2, **dadurch gekennzeichnet, dass** nach dem Eintauchen des Eintauchendes der optischen Faser (2) in die Schmelze (3) in dem Probenaufnahmeraum ein Unterdruck erzeugt und Schmelze in den Probenaufnahmeraum eingesaugt wird.

4. Verfahren nach Anspruch 3, **dadurch gekennzeichnet, dass** nach der Messung der Abkühlkurve die optische Faser (2) erneut in die Schmelze (3) getaucht, in dem Probenaufnahmeraum ein Überdruck erzeugt und Schmelze aus dem Probenaufnahmeraum herausgedrückt wird.

5. Verfahren nach Anspruch 3, **dadurch gekennzeichnet, dass** nach der Messung der Abkühlkurve und/oder der Aufheizkurve das Eintauchende der Faser (2) und das mit Schmelze gefüllte Ende des Probenaufnahmeraumes abgeschnitten werden.

6. Verfahren nach einem der Ansprüche 1 bis 5, **dadurch gekennzeichnet, dass** auch die Badtemperatur der Schmelze (3) gemessen wird.

7. Verfahren nach einem der Ansprüche 1 bis 6, **dadurch gekennzeichnet, dass** das Eintauchende der optischen Faser (2) zumindest zeitweise in Vibration versetzt wird.

8. Verfahren nach einem der Ansprüche 1 bis 7, **dadurch gekennzeichnet, dass** Liquidustemperatur und/oder Solidustemperatur und/oder Phasenumwandlungstemperatur der Schmelze bestimmt werden.

9. Vorrichtung zum Messen der Abkühlkurve von Schmelzen und/oder der Aufheizkurve von Schmelzenproben mit einer optischen Faser (2), deren eines Ende mit einem Messgerät (9) zur Erfassung und Verarbeitung eines von der Faser (2) erhaltenen Signals verbunden ist sowie mit einem Träger (1) für die Faser (2), **dadurch gekennzeichnet, dass** die optische Faser (2) ein Eintauchende aufweist, wobei das Eintauchende mindestens teilweise eine freie Oberfläche aufweist und das Eintauchende der Faser (2) von einem temperaturbeständigen Probenaufnahmeraum beabstandet umgeben ist und wobei sowohl die Stirnseite als auch ein Teil der Seitenwand des Eintauchendes der optischen Faser (2) eine freie Oberfläche aufweisen.

10. Vorrichtung nach Anspruch 9, **dadurch gekennzeichnet, dass** die Länge der freien Oberfläche der Seitenwand der optischen Faser (2) mindestens 10 mal, vorzugsweise mindestens 30 mal so groß ist wie der Durchmesser der freien Oberfläche der Stirnseite der optischen Faser (2).

11. Vorrichtung nach Anspruch 9 oder 10, **dadurch gekennzeichnet, dass** die Stirnseite der optischen Faser (2) eine freie Oberfläche aufweist.

12. Vorrichtung nach einem der Ansprüche 9 bis 11, **dadurch gekennzeichnet, dass** die optische Faser (2) aus Quarzglas oder Saphir gebildet ist.

13. Vorrichtung nach einem der Ansprüche 9 bis 12, **dadurch gekennzeichnet, dass** der Probenaufnahmeraum als Rohr ausgebildet ist.

14. Vorrichtung nach einem der Ansprüche 9 bis 13, **dadurch gekennzeichnet, dass** der Probenaufnahmeraum aus Quarzglas gebildet ist.

15. Vorrichtung nach einem der Ansprüche 9 bis 13, **dadurch gekennzeichnet, dass** der Probenaufnahmeraum aus Metall oder Keramik gebildet ist.

16. Vorrichtung nach einem der Ansprüche 9 bis 15, **dadurch gekennzeichnet, dass** am Eintauchende des Probenaufnahmeraumes eine Schlackekappe angeordnet ist.

17. Vorrichtung nach einem der Ansprüche 9 bis 16, **dadurch gekennzeichnet, dass** der Probenaufnahmeraum mit einer Vorrichtung (11) zur Erzeugung von Über- oder Unterdruck pneumatisch verbunden ist.

18. Vorrichtung nach einem der Ansprüche 9 bis 17, **dadurch gekennzeichnet, dass** die optische Faser (2) mit einem Vibrator verbunden ist.

19. Verwendung der Vorrichtung nach einem der Ansprüche 9 bis 18 zur Bestimmung von Liquidustemperatur und/oder Solidustemperatur und/oder Phasenumwandlungstemperatur der Schmelze.

## Claims

1. Method for measuring the cooling curve of melts and/or the heating curve for melt samples with an optical fibre, wherein the immersion end of the optical fibre (2) is immersed in the melt (3) and a sample is formed in the process in a sample receiving chamber, the sample receiving chamber with the sample and the optical fibre (2) then being removed from the metal melt (3) and the cooling curve of the sample and/or, after prior solidification of the sample, the temperature course during heating being measured with the aid of a signal received by the optical fibre (2) and passed to a measuring device (9), **characterised in that** an insertion end of the optical fibre (2) having an at least partially free surface is surrounded, at a spacing, by the temperature-resistant sample receiving chamber and both the end face and a part of the side wall of the immersion end of the optical fibre (2) are brought into direct contact with the melt (3).

2. Method according to claim 1, **characterised in that** the length of the part of the side wall of the optical fibre (2) which is in direct contact with the melt (3) is at least 10 times, preferably at least 30 times, as large as the diameter of the end face of the optical fibre (2) in direct contact with the melt (3).

3. Method according to claim 1 or 2, **characterised in that** after the immersion of the immersion end of the optical fibre (2) in the melt (3), a negative pressure is produced in the sample receiving chamber and melt is sucked into the sample receiving chamber.

4. Method according to claim 3, **characterised in that** after the measurement of the cooling curve, the optical fibre (2) is immersed again in the melt (3), an excess pressure is produced in the sample receiving chamber and melt is pressed out of the sample receiving chamber.

5. Method according to claim 3, **characterised in that** after measurement of the cooling curve and/or the heating curve, the immersion end of the fibre (2) and the end of the sample receiving chamber filled with melt is cut off.

6. Method according to any one of claims 1 to 5, **characterised in that** the bath temperature of the melt (3) is also measured.

7. Method according to any one of claims 1 to 6, **characterised in that** the immersion end of the optical fibre (2) is at least temporarily made to vibrate.

8. Method according to any one of claims 1 to 7, **characterised in that** the liquidus temperature and/or solidus temperature and/or phase transition temperature of the melt are determined.

9. Device for measuring the cooling curve of melts and/or the heating curve of melt samples with an optical fibre (2), one end of which is connected to a measuring device (9) for detecting and processing a signal received by the fibre (2), and also with a carrier (1) for the fibre (2), **characterised in that** the optical fibre (2) has an immersion end, the immersion end having an at least partially free surface, and the immersion end of the fibre (2) being surrounded, at a spacing, by a temperature-resistant sample receiving chamber and both the end face and a part of the side wall of the immersion end of the optical fibre (2) having a free surface.

10. Device according to claim 9, **characterised in that** the length of the free surface of the side wall of the optical fibre (2) is at least 10 times, preferably at least 30 times, as large as the diameter of the free surface of the end face of the optical fibre (2).

11. Device according to claim 9 or 10, **characterised in that** the end face of the optical fibre (2) has a free surface.

12. Device according to any one of claims 9 to 11, **characterised in that** the optical fibre (2) is formed from quartz glass or sapphire.

13. Device according to any one of claims 9 to 12, **characterised in that** the sample receiving chamber is configured as a tube.

14. Device according to any one of claims 9 to 13, **characterised in that** the sample receiving chamber is formed from quartz glass.

15. Device according to any one of claims 9 to 13, **characterised in that** the sample receiving chamber is formed from metal or ceramic.

16. Device according to any one of claims 9 to 15, **characterised in that** a slag cap is arranged at the immersion end of the sample receiving chamber.

17. Device according to any one of claims 9 to 16, **characterised in that** the sample receiving chamber is pneumatically connected to a device (11) for producing excess or negative pressure.

18. Device according to any one of claims 9 to 17, **characterised in that** the optical fibre (2) is connected to a vibrator.

19. Use of the device according to any one of claims 9 to 18 for determining the liquidus temperature and/or solidus temperature and or phase transition temperature of the melt.

## Revendications

1. Procédé pour mesurer la courbe de refroidissement de masses en fusion et/ou la courbe d'échauffement d'échantillons de masse en fusion, avec une fibre optique, procédé selon lequel on plonge la fibre optique (2), avec son extrémité de plongée, dans la masse en fusion (3), et on forme à cette occasion un échantillon dans une chambre de prélèvement d'échantillon, et selon lequel on extrait ensuite, de la masse de métal en fusion (3), la chambre de prélèvement d'échantillon avec l'échantillon et la fibre optique (2), et on mesure la courbe de refroidissement et/ou, après solidification préalable de l'échantillon, la courbe de variation de température lors de l'échauffement, au regard d'un signal relevé par la fibre optique (2) et transmis à un appareil de mesure (9), **caractérisé en ce qu'**une extrémité de plongée de la fibre optique (2), présentant au moins partiellement une surface libre ou dégagée, est entourée à distance par la chambre de prélèvement d'échantillon, qui est réfractaire ou résiste à la température, et aussi bien la face frontale qu'une partie de la paroi latérale de l'extrémité de plongée de la fibre optique (2) sont amenées en contact direct avec la masse en fusion (3).

2. Procédé selon la revendication 1, **caractérisé en ce que** la longueur de la paroi latérale de la fibre optique (2), qui se trouve en contact direct avec la masse en fusion (3), est au moins 10 fois, de préférence au moins 30 fois aussi grande que le diamètre de la face frontale de la fibre optique (2), qui se trouve en contact direct avec la masse en fusion (3).

3. Procédé selon la revendication 1 ou 2, **caractérisé en ce qu'**après plongée de l'extrémité de plongée de la fibre optique (2) dans la masse en fusion (3), on engendre une dépression dans la chambre de prélèvement d'échantillon, et l'on aspire de la masse en fusion dans la chambre de prélèvement d'échantillon.

4. Procédé selon la revendication 3, **caractérisé en ce qu'**après la mesure de la courbe de refroidissement, on plonge à nouveau la fibre optique (2) dans la masse en fusion (3), on engendre une surpression dans la chambre de prélèvement d'échantillon, et l'on refoule de la masse en fusion hors de la chambre de prélèvement d'échantillon.

5. Procédé selon la revendication 3, **caractérisé en ce qu'**après la mesure de la courbe de refroidissement et/ou de la courbe d'échauffement, on coupe l'extrémité de plongée de la fibre (2) et l'extrémité remplie de masse en fusion de la chambre de prélèvement d'échantillon.

6. Procédé selon l'une des revendications 1 à 5, **caractérisé en ce que** l'on mesure également la température de bain de la masse en fusion (3).

7. Procédé selon l'une des revendications 1 à 6, **caractérisé en ce que** l'on met en vibration, au moins par moments, l'extrémité de plongée de la fibre optique (2).

8. Procédé selon l'une des revendications 1 à 7, **caractérisé en ce que** l'on détermine une température de liquidus et/ou une température de solidus et/ou une température de changement de phase.

9. Dispositif pour mesurer la courbe de refroidissement de masses en fusion et/ou la courbe d'échauffement d'échantillons de masse en fusion, comprenant une fibre optique (2), dont une extrémité est reliée à un appareil de mesure (9) pour relever et traiter un signal obtenu à partir de la fibre (2), et comprenant également un support (1) pour la fibre (2), **caractérisé en ce que** la fibre optique (2) présente une extrémité de plongée, cette extrémité de plongée présentant au moins en partie une surface libre ou dégagée, et l'extrémité de plongée de la fibre (2) étant entourée à distance par une chambre de prélèvement d'échantillon réfractaire ou résistant à la température, et **en ce qu'**aussi bien la face frontale qu'une partie de la paroi latérale de l'extrémité de plongée de la fibre optique (2) présentent une surface libre ou dégagée.

10. Dispositif selon la revendication 9, **caractérisé en ce que** la longueur de la surface libre ou dégagée de la paroi latérale de la fibre optique (2) est au moins 10 fois, de préférence au moins 30 fois aussi grande que le diamètre de la surface libre ou dégagée de la face frontale de la fibre optique (2).

11. Dispositif selon la revendication 9 ou 10, **caractérisé en ce que** la face frontale de la fibre optique (2) présente une surface libre ou dégagée.

12. Dispositif selon l'une des revendications 9 à 11, **caractérisé en ce que** la fibre optique (2) est réalisée en verre de quartz ou en saphir.

13. Dispositif selon l'une des revendications 9 à 12, **caractérisé en ce que** chambre de prélèvement d'échantillon est réalisée sous forme de tube.

14. Dispositif selon l'une des revendications 9 à 13, **caractérisé en ce que** la chambre de prélèvement d'échantillon est réalisée en verre de quartz.

15. Dispositif selon l'une des revendications 9 à 13, **caractérisé en ce que** la chambre de prélèvement d'échantillon est réalisée en métal ou en céramique.

16. Dispositif selon l'une des revendications 9 à 15, **caractérisé en ce qu'**à l'extrémité de plongée de la chambre de prélèvement d'échantillon est agencé un cabochon de laitier.

17. Dispositif selon l'une des revendications 9 à 16, **caractérisé en ce que** la chambre de prélèvement d'échantillon est reliée sur le plan pneumatique à un dispositif (11) pour produire une dépression ou une surpression.

18. Dispositif selon l'une des revendications 9 à 17, **caractérisé en ce que** la fibre optique (2) est reliée à un vibrateur.

19. Utilisation du dispositif selon l'une des revendications 9 à 18, pour la détermination d'une température de liquidus et/ou d'une température de solidus et/ou d'une température de changement de phase.
